# EUROPEAN PATENT SPECIFICATION

(11) **EP 2 915 682 B1**
(45) Date of publication and mention of the grant of the patent: **03.04.2019**
(21) Application number: 13850495.6
(22) Date of filing: 31.10.2013
(51) Int. Cl.: B60B 35/14, F16C 19/18, F16C 33/62, F16C 33/64, F16C 35/073, F16D 1/06, F16D 1/10

(54) **BEARING DEVICE FOR WHEEL**
RADLAGERVORRICHTUNG
DISPOSITIF DE PALIER POUR ROUE

(30) Priority: 01.11.2012 JP 2012241444
(43) Date of publication of application: 09.09.2015
(73) Proprietor: NTN Corporation, Osaka-shi, Osaka 550-0003 (JP)
(72) Inventor: HIRANO, Shinsuke, Iwata-shi Shizuoka 438-8510 (JP); SEKI, Makoto, Iwata-shi Shizuoka 438-8510 (JP)
(74) Representative: Cohausz & Florack
(86) International application number: PCT/JP2013/079571
(87) International publication number: WO 2014/069578

(56) References cited:
- EP-A1- 2 284 021
- EP-A1- 2 285 591
- EP-A1- 2 441 594
- EP-A1- 2 441 594
- WO-A2-2009/089982
- JP-A- S63 184 501
- JP-A- 2008 221 982
- JP-A- 2008 536 075
- JP-A- 2009 234 541

## Description

### Field of the Invention

The present invention relates to a wheel bearing apparatus for supporting wheels of a vehicle, and more particularly to a wheel bearing apparatus each having a wheel bearing and a constant velocity universal joint for rotationally supporting driving wheels (i.e. front wheels of FF vehicles, rear wheels of FR or RR vehicles and all wheels of 4WD vehicles) mounted on independent suspensions.

### Description of Background Art

The power transmitting apparatus of a vehicle, such as an automobile, is required not only to perform transmission of engine power of the automobile to the wheels but also to permit radial, axial and moment displacement from the wheels caused during bounds in rough road running or turning of the vehicle. Accordingly, one end of a drive shaft, interposed between an engine side and a driving wheel side, is connected to a differential gear via a constant velocity universal joint of the sliding type. The other end is connected to driving wheels via a wheel bearing apparatus including a fixed type constant velocity universal joint.

Recently, it has been strictly desired to improve fuel consumption in view of resource saving or anti-pollution. For meeting such a demand, it has been strongly noticed and desired to reduce the weight of automobile parts, especially a wheel bearing apparatus. Although there have been proposed various wheel bearing apparatus intended to reduce their weight, it has been also strongly desired to reduce costs of assembling and disassembling of the wheel bearing apparatus in automobile assembling sites or automobile maintenance markets.

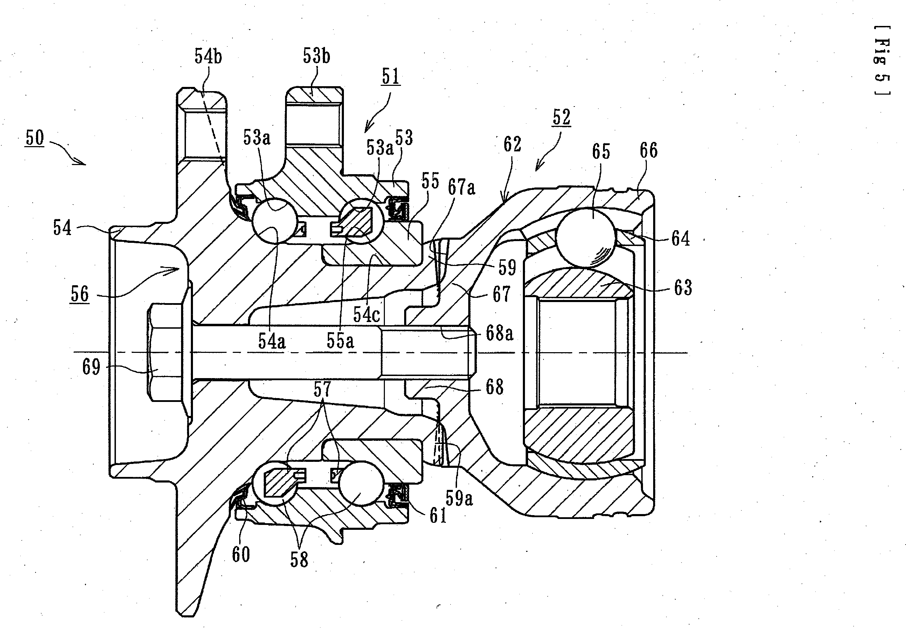

A wheel bearing apparatus 50 shown in Fig. 5 is a representative example satisfying these demands and formed as a unit comprising a double row rolling bearing 51 and a constant velocity universal joint 52 which are detachable each other. The double row rolling bearing 51 generally comprises an outer member 53, an inner member 56, and double row balls 58, 58. More particularly, the outer member 53 has an integrally formed body mounting flange 53b to be mounted on a body of a vehicle and double row outer raceway surfaces 53a, 53a formed on the inner circumference of the outer member 53. The inner member 56 comprises a hub wheel 54 and an inner ring 55. More particularly, the hub wheel 54 has, on its one end an integrally formed wheel mounting flange 54 for mounting a wheel (not shown), an inner raceway surfaces 54a to be oppositely arranged to one of the double row outer raceway surfaces 53a, 53a, and a cylindrical portion 54c axially extending from the inner raceway surface 54a, and the inner ring 55 is adapted to be press-fitted onto the cylindrical portion 54c of the hub wheel 54 and formed with an inner raceway surface 55a to be oppositely arranged to the other of the double row outer raceway surfaces 53a, 53a. The double row balls 58, 58 are disposed between the outer and inner raceway surfaces and rollably held by cages 57. The inner ring 55 is axially immovably secured by a caulked portion 59 formed by plastically deforming the end of the cylindrical portion 54c radially outward. Furthermore, an end face of the caulked portion 59 is formed with a face spline 59a which is formed simultaneously with the formation of the caulked portion 59.

Seals 60, 61 are mounted on annular openings formed between the outer member 53 and the inner member 56 for preventing leakage of grease sealed in the bearing and entering of rain water or dusts into the bearing.

The constant velocity universal joint 52 comprises an outer joint member 62, joint inner ring 63, a cage 64, and torque transmitting balls 65. The outer joint member 62 comprises a cup-shaped mouth portion 66, a shoulder portion 67 forming a bottom of the mouth portion 66, and a hollow shaft portion 68 axially extending from the shoulder portion 67 and a female thread 68a is formed on an inner circumference of the shaft portion 68. An end face of the shoulder portion 67 is formed with a face spline 67a. This face spline 67a engages the face spline 59a formed on the end face of the caulked portion 59 and thus the rotational torque from a drive shaft (not shown) can be transmitted to the wheel mounting flange 54b via the constant velocity universal joint 52 and the inner member 56.

When a fastening bolt 69 is fastened to the female thread 68a of the shaft portion 68 of the constant velocity universal joint 52, both the opposite face splines 67a, 59a of the outer joint member 62 and the inner member 56 are press-contacted each other and thus the double row rolling bearing 51 and the constant velocity universal joint 52 can be detachably united. This contributes to reduction of weight and size as well as simplification of assembly and disassembly of the wheel bearing assembly (see e.g. Patent Document 1 or 2 below).

### Documents of Prior Art

### Patent Document

Patent Document 1: JP 63-184501 A
Patent Document 2: JP 2009 234541 A

### Disclosure of the Invention

### Problems to be solved by the Invention

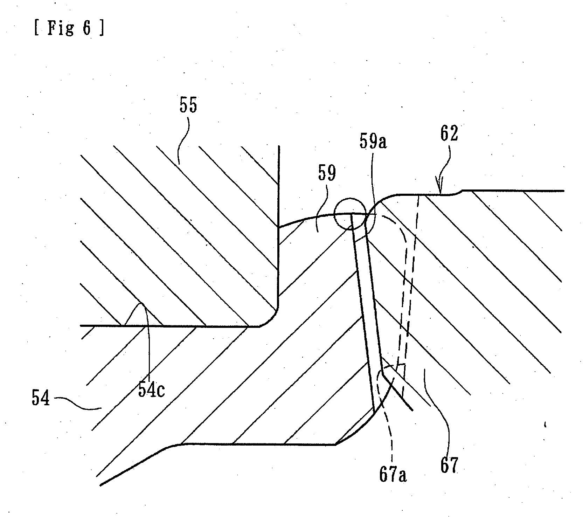

However, in such a wheel bearing apparatus 50 of the prior art as shown in Fig. 6, since the face spline 59a of the caulked portion 59 formed simultaneously with the formation of the caulked portion 59 is processed at a higher caulking degree than the usual caulking degree, it is afraid that cracks would be caused in the face spline 59a. Especially the crack generation rate would be increased at a radially outermost tooth bottom of the face spline 59a in which the caulking is performed at a highest degree.

In addition, since the specifications of the face spline 59a are required to satisfy demands of automobile manufacturers, it is impossible to largely change the specifications and thus it is difficult to adopt free designs for suppressing generation of cracks.

It is therefore an object of the present invention to provide a wheel bearing apparatus which can prevent generation of cracks during the spline forming process by a simple way and improve the durability of the wheel bearing apparatus.

### Means for solving the Problems

For achieving the object of the present invention, there is provided, according to the present invention of claim 1, a wheel bearing apparatus in which a double row rolling bearing and a constant velocity universal joint are detachably united, the double row rolling bearing comprising an outer member formed on its outer circumference with a body mounting flange to be mounted on a body of a vehicle and its inner circumference with double row outer raceway surfaces; an inner member including a hub wheel and at least one inner ring, the hub wheel being integrally formed with a wheel mounting flange on its one end and an axially extending cylindrical portion and the inner ring being press-fitted onto the cylindrical portion of the hub wheel, the inner member being formed with double row inner raceway surfaces to be oppositely arranged to the double row outer raceway surfaces; and double row rolling elements rollably disposed between the double row outer raceway surfaces of the outer member and the double row inner raceway surfaces of the inner member; the inner ring being axially immovably secured by a caulked portion formed by plastically deforming the end of the cylindrical portion radially outward; the constant velocity universal joint having an outer joint member including a cup-shaped mouth portion, a shoulder portion forming a bottom of the mouth portion, and a shaft portion axially extending from the shoulder portion and formed on its inner circumference with female thread all of which are integrally formed; and end faces of the shoulder portion of the outer joint member and the caulked portion being formed with face splines respectively to join the double row rolling bearing and the constant velocity universal joint in a torque transmittable manner characterized in that the face spline of the caulked portion has a portion in which a tooth height of the tooth space of a portion radially outer than the pitch circle diameter is set lower than that of other portions.

According to the wheel bearing apparatus of claim 1 of the present invention, since end faces of the shoulder portion of the outer joint member and the caulked portion are formed with face splines respectively to join the double row rolling bearing and the constant velocity universal joint in a torque transmittable manner and the face spline of the caulked portion has a portion in which a tooth height of the tooth space of a portion radially outer than the pitch circle diameter is set lower than that of other portions, it is possible to provide a wheel bearing apparatus which can insure qualities such as configuration, dimensions etc. on the pitch circle diameter (PCD) of the face spline and improve the durability of the wheel bearing apparatus with preventing generation of cracks on the face spline by a simple way.

It is preferable as defined in claim 2 that the face spline of the caulked portion is formed by a caulking jig according to the plastic deforming process simultaneously with the formation of the caulked portion. This makes it possible to reduce the processing steps and accordingly the manufacturing cost.

It is preferable as defined in claim 3 that a breast wall having a predetermined inclination angle is formed on the radially outermost position of the tooth space of the face spline.

It is also preferable as defined in claim 4 that the inclination angle of the breast wall is set to a range of 10 to 40°. This makes it possible to avoid mutual interference between the face splines and to effectively reduce stresses generated during the caulking process and thus generation of cracks.

It is preferable as defined in claim 5 that a breast wall having a circular arc shape of a predetermined radius of curvature is formed on the radially outermost position of the tooth space of the face spline.

It is preferable as defined in claim 6 that the radius of curvature of the breast wall is set to a range 2 mm ≦ R ≦ 10 mm. This makes it possible to avoid mutual interference between the face splines and to effectively reduce stresses generated during the caulking process and thus generation of cracks.

It is also preferable as defined in claim 7 that the inner member comprises a hub wheel and an inner ring, the hub wheel being integrally formed with an inner raceway surface to be oppositely arranged to one of the double row outer raceway surfaces and with a cylindrical portion axially extending from the inner raceway surface, and the inner ring being formed with an inner raceway surface to be oppositely arranged to the other of the double row outer raceway surfaces; and that the hub wheel is formed of medium-high carbon steel including carbon of 0.40 to 0.80% by weight and its outer circumferential surface is hardened by high frequency induction hardening as having a surface hardness of 58 to 64 HRC over a region from an inboard-side base of the wheel mounting flange to the cylindrical portion including the inner raceway surface while the caulked portion is maintained in a non-quenched condition having surface hardness after forging. This makes it possible to give the cylindrical portion sufficient mechanical strength against the rotary bending load applied to the wheel mounting flange and thus to improve the anti-fretting property of the cylindrical portion as well as smoothly perform the plastic caulking process without causing generation of any micro cracks during the caulking process.

### Effects of the Invention

According to the wheel bearing apparatus of the present invention, since it comprises an outer member formed on its outer circumference with a body mounting flange to be mounted on a body of a vehicle and its inner circumference with double row outer raceway surfaces; an inner member including a hub wheel and at least one inner ring, the hub wheel being integrally formed with a wheel mounting flange on its one end and an axially extending cylindrical portion and the inner ring being press-fitted onto the cylindrical portion of the hub wheel, the inner member being formed with double row inner raceway surfaces to be oppositely arranged to the double row outer raceway surfaces; and double row rolling elements rollably disposed between the double row outer raceway surfaces of the outer member and the double row inner raceway surfaces of the inner member; the inner ring being axially immovably secured by a caulked portion formed by plastically deforming the end of the cylindrical portion radially outward; the constant velocity universal joint having an outer joint member including a cup-shaped mouth portion, a shoulder portion forming a bottom of the mouth portion, and a shaft portion axially extending from the shoulder portion and formed on its inner circumference with female thread all of which are integrally formed; and end faces of the shoulder portion of the outer joint member and the caulked portion being formed with face splines respectively to join the double row rolling bearing and the constant velocity universal joint in a torque transmittable manner and is characterized in that the face spline of the caulked portion has a portion in which a tooth height of the tooth space of a portion radially outer than the pitch circle diameter is set lower than that of other portions, it is possible to provide a wheel bearing apparatus which can insure qualities such as configuration, dimensions etc. on the pitch circle diameter (PCD) of the face spline and improve the durability of the wheel bearing apparatus with preventing generation of cracks on the face spline by a simple way.

### Brief Description of the Drawings

[Fig. 1] A longitudinal section view showing a preferred embodiment of a wheel bearing apparatus of the present invention;
[Fig. 2] A partially enlarged view showing a face spline portion of Fig. 1;
[Fig. 3] An elevation view taken along a line III-III of Fig. 1;
[Fig. 4] A partially enlarged view showing a modification of face spline of Fig. 2:
[Fig. 5] A longitudinal section view showing a wheel bearing apparatus of the prior art; and
[Fig. 6] A partially enlarged view showing a face spline portion of Fig. 5.

### Preferable mode for carrying out the Invention

One preferable mode for carrying out the present invention is a wheel bearing apparatus in which a double row rolling bearing and a constant velocity universal joint are detachably united, the double row rolling bearing comprising an outer member formed on its outer circumference with a body mounting flange to be mounted on a body of a vehicle and its inner circumference with double row outer raceway surfaces; an inner member including a hub wheel and an inner ring, the hub wheel being integrally formed with a wheel mounting flange on its one end and an inner raceway surface to be oppositely arranged to one of the double row outer raceway surfaces and a cylindrical portion axially extending from the inner raceway surface, the inner ring being press-fitted onto the cylindrical portion of the hub wheel and being formed with an inner raceway surface to be oppositely arranged to the other of the double row outer raceway surfaces; and double row rolling elements rollably disposed between the double row outer raceway surfaces of the outer member and the double row inner raceway surfaces of the inner member; the inner ring being axially immovably secured by a caulked portion formed by plastically deforming the end of the cylindrical portion radially outward; the constant velocity universal joint having an outer joint member including a cup-shaped mouth portion, a shoulder portion forming a bottom of the mouth portion, and a shaft portion axially extending from the shoulder portion and formed on its inner circumference with female thread all of which are integrally formed; and end faces of the shoulder portion of the outer joint member and the caulked portion being formed with face splines respectively and both the face splines are press-contacted each other by fastening bolt fastened to the female-thread of the shaft portion to join the double row rolling bearing and the constant velocity universal joint in a torque transmittable and axially detachable manner characterized in that the face spline of the caulked portion is formed by a caulking jig according to the plastic deforming process simultaneously with the formation of the caulked portion, that a breast wall having a predetermined inclination angle is formed on the radially outermost position of the tooth space of the face spline, and that the tooth height of the radially outermost portion is set lower than that of other portions.

### Embodiment

A preferred embodiment of the present invention will be hereinafter described with reference to the drawings.

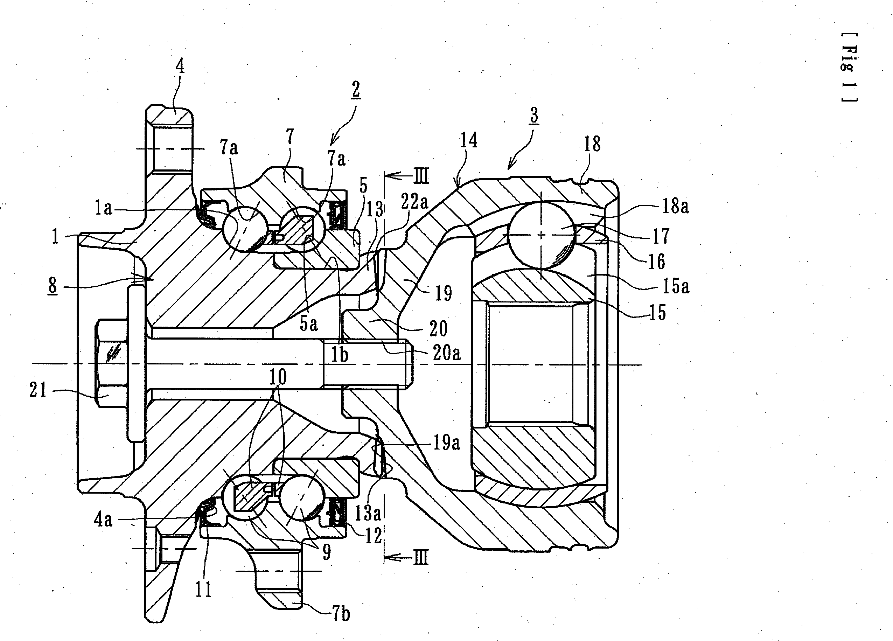

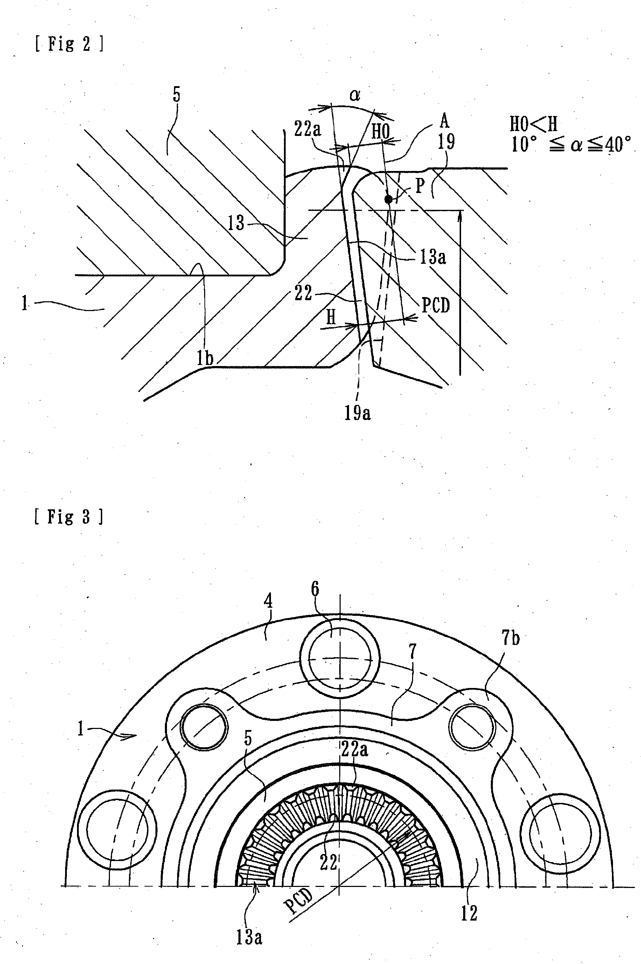

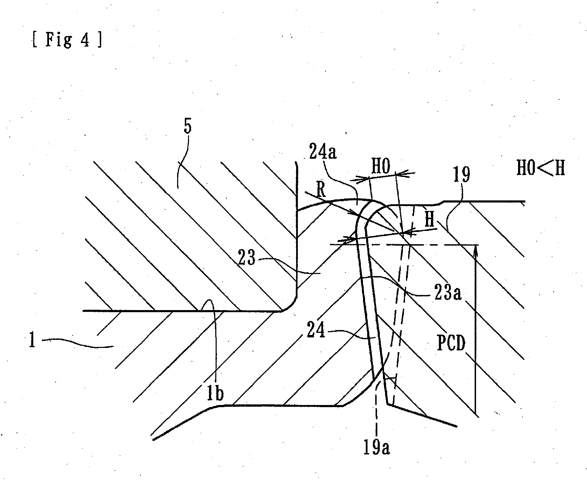

Fig. 1 is a longitudinal section view showing a preferred embodiment of a wheel bearing apparatus of the present invention, Fig. 2 is a partially enlarged view showing a face spline portion of Fig. 1, Fig. 3 is an elevation view taken along a line III-III of Fig. 1, and Fig. 4 is a partially enlarged view showing a modification of face spline of Fig. 2. In descriptions of the present embodiment, a term "outboard-side" defines a side which is positioned outside of a vehicle body (the left in Fig. 1) and a term "inboard-side" defines a side which is positioned inside of a vehicle body (the right in Fig. 1) when the wheel bearing apparatus is mounted on a vehicle body.

This wheel bearing apparatus is a so-called "third generation" type in which a hub wheel 1, a double row rolling bearing 2 and a constant velocity universal joint 3 are detachably united.

The double row rolling bearing 2 comprises an outer member 7, an inner member 8 and double row rolling elements (balls) 9, 9. The outer member 7 is formed of medium-high carbon steel such as S53C including carbon of 0.40 to 0.80% by weight and integrally formed on its outer circumference with a body mounting flange 7b and on its inner circumference with double row outer raceway surfaces 7a, 7a. At least the double row outer raceway surfaces 7a, 7a are hardened by high frequency induction hardening to have a surface hardness of 58 to 64 HRC.

The inner member 8 comprises a hub wheel 1 and an inner ring 5. The hub wheel 1 is integrally formed with an inner raceway surface 1a to be oppositely arranged to one of the double row outer raceway surfaces 7a, 7a and the inner ring 5 being formed with an inner raceway surface 5a to be oppositely arranged to the other of the double row outer raceway surfaces 7a, 7a. The double row rolling elements 9, 9 are disposed between the double row outer raceway surfaces 7a, 7a of the outer member 7 and the double row inner raceway surfaces 1a, 5a of the inner member 8 and rollably held by cages 10,10.

Seals 11, 12 are mounted on annular openings formed between the outer member 7 and the inner member 8 for preventing leakage of grease sealed in the bearing and entering of rain water or dusts into the bearing.

The hub wheel 1 is integrally formed, on its outer-side end, with a wheel mounting flange 4 for mounting a wheel (not shown) and with a cylindrical portion 1b axially extending from the inner raceway surface 1a. The inner ring 5 is disposed on the cylindrical portion 1b and secured axially immovably relative to the hub wheel 1 under a pre-stressed condition by a caulked portion 13 formed by plastically deforming the end of the cylindrical portion 1b radially outward.

The hub wheel 1 is formed of medium-high carbon steel such as S53C including carbon of 0.40 to 0.80% by weight and is hardened by high frequency induction hardening to have a surface hardness of 58 to 64 HRC over a region from an inboard-side base 4a of the wheel mounting flange 4 to the cylindrical portion 1b including the inner raceway surface 1a. The caulked portion 13 is maintained in a non-quenched condition having surface hardness after forging. This enables to apply sufficient mechanical strength against rotary bending load applied to the wheel mounting flange 4 and thus to improve the anti-fretting property of the cylindrical portion 1b on which the inner ring 5 is fitted and to perform the plastic deformation process of the caulked portion 13 without causing any clack.

The inner ring 5 and rolling elements 9 are formed of high carbon chrome steel such as SUJ2 and dipping hardened to their cores as having hardness of 60 to 64 HRC. Although it is shown here a wheel bearing apparatus formed by a double row angular contact ball bearing 2 using balls as rolling elements 9, the present invention is not limited to such a bearing and may be a double row tapered roller bearing using tapered rollers as rolling elements 9.

The constant velocity universal joint 3 comprises an outer joint member 14, joint inner ring 15, a cage 16, and torque transmitting balls 17. The outer joint member 14 comprises a cup-shaped mouth portion 18, a shoulder portion 19 forming a bottom of the mouth portion 18, and a hollow shaft portion 20 axially extending from the shoulder portion 19 and a female thread 20a is formed on an inner circumference of the shaft portion 20. In addition, curved track grooves 18a, 15a are formed respectively on the inner circumference of the mouth portion 18 and on the outer circumference of the joint inner ring 15. The outer joint member 14 is formed of medium-high carbon steel such as S53C including carbon of 0.40 to 0.80% by weight and the track groove 18a is hardened by high frequency induction hardening to have a surface hardness of 58 to 64 HRC.

According to the present embodiment, an end face of the shoulder portion 19 of the outer joint member 14 is formed with a face spline 19a. On the other hand, an end face of the caulked portion 13 is formed with a face spline 13a which is formed simultaneously with formation of the caulked portion 13 and adapted to be engaged with the face spline 19a formed on the shoulder portion 19 of the outer joint member 14. This enables to reduce the processing steps and accordingly the manufacturing cost. When a fastening bolt 21 is fastened to the female thread 20a of the shaft portion 20 of the constant velocity universal joint 3, both the opposite face splines 19a, 13a of the shoulder portion 19 of the outer joint member 14 and the caulked portion 13 of the hub wheel 1 are press-contacted each other and thus the double row rolling bearing 2 and the constant velocity universal joint 3 can be detachably united.

As shown in Figs. 2 and 3, in the face spline 13a formed by plastic deforming process using a caulking jig (not shown) simultaneously with the formation of the caulked portion 13, the tooth height HO radially outer than its pitch circle diameter (PCD) (i.e. the tooth height HO of the tooth space 22 of the radially outermost portion) is set lower than the tooth height H of other portions (HO < H), wherein "the tooth height H of other portions" means a distance (max. tooth height: H) from a line "A" parallel to the tooth space radially inner than the PCD and passing through the tooth top P to the tooth space. More particularly, the tooth height HO (the distance from the line "A" to the tooth space: HO) is reduced by providing a breast wall 22a in which the tooth space 22 radially outer than the PCD of the face spline 13a is not straight and inclined at angle α. This makes it possible to provide a wheel bearing apparatus which can insure qualities such as configuration, dimensions etc. on the pitch circle diameter (PCD) of the face spline 13a and improve the durability of the wheel bearing apparatus with preventing generation of cracks on the face spline 13a by a simple way.

The inclination angle α of the breast wall 22a is set to a range of 10 to 40°, since it is afraid that the breast wall 22a would interfere with its mating face spline 19a if the inclination angle α exceeds 40°, on the other hand, the effects brought by stress reduction during the machining process would be largely decreased if the inclination angle α is less than 10°.

Fig. 4 shows a modification of Fig. 2. Similarly to the previous embodiment, a face spline 23a is formed simultaneously with the formation of the caulked portion 23 by the caulking jig (not shown) and also formed so that the tooth height HO of the radially outermost portion is smaller than the tooth height H of other portions (HO < H). More particularly, the tooth height HO of the radially outermost portion is reduced by providing a circular arc-shaped (not straight-shaped) breast wall 24a on a tooth space 24 radially outer than the PCD of the face spline 23a. This makes it possible to insure qualities such as configuration, dimensions etc. on the PCD of the face spline 23a and to prevent generation of cracks on the face spline 23a by a simple way. In this case, the radius of curvature R of the breast wall 24a is set to a range 2 mm ≦ R ≦ 10 mm, since it is afraid that the breast wall 24a would interfere with its mating face spline 19a if the radius of curvature R of the breast wall 24a is less than 2 mm, on the other hand, the effects brought by stress reduction during the machining process would be largely decreased if the radius of curvature R of the breast wall 24a exceeds 10 mm.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The present invention can be applied to wheel bearing apparatus in which a double row rolling bearing having a hub wheel and a constant velocity universal joint are detachably united via face splines.

### Explanation of Reference numerals and Characters

- 1: hub wheel
- 1a, 5a: inner raceway surface
- 1b: cylindrical portion
- 2: double row rolling bearing
- 3: constant velocity universal joint
- 4: wheel mounting flange
- 4a: inboard-side base of wheel mounting flange
- 5: inner ring
- 7: outer member
- 7a: outer raceway surface
- 7b: body mounting flange
- 8: inner member
- 9: rolling element
- 10: cage
- 11,12: seal
- 13, 23: caulked portion
- 13a, 19a, 23a: face spline
- 14: outer joint member
- 15: joint inner ring
- 16: cage
- 15a, 18a: track groove
- 17: torque transmitting ball
- 18: mouth portion
- 19: shoulder portion
- 20: shaft portion
- 20a: female thread
- 21: fastening bolt
- 22, 24: tooth space
- 22a, 24a: breast wall
- 50: wheel bearing apparatus
- 51: double row rolling bearing
- 52: constant velocity universal joint
- 53: outer member
- 53a: outer raceway surface
- 53b: body mounting flange
- 54: hub wheel
- 54a, 55a: inner raceway surface
- 54b: wheel mounting flange
- 54c: cylindrical portion
- 55: inner ring
- 56: inner member
- 57: cage
- 58: ball
- 59: caulked portion
- 59a, 67a: face spline
- 60,61: seal
- 62: outer joint member
- 63: joint inner ring
- 64: cage
- 65: torque transmitting ball
- 66: mouth portion
- 67: shoulder portion
- 68: shaft portion
- 68a: female thread
- 69: fastening bolt
- H: tooth height of face spline
- HO: tooth height of radially outermost portion of face spline
- PCD: pitch circle diameter of face spline
- R: radius of curvature of breast wall
- α: inclination angle of breast wall

## Claims

1. A wheel bearing apparatus in which a double row rolling bearing (2) and a constant velocity universal joint (3) are detachably united, the double row rolling bearing (2) comprising an outer member (7) formed on its outer circumference with a body mounting flange (7b) to be mounted on a body of a vehicle and its inner circumference with double row outer raceway surfaces (7a, 7a); an inner member (8) including a hub wheel (1) and at least one inner ring (5), the hub wheel (1) being integrally formed with a wheel mounting flange (4) on its one end and an axially extending cylindrical portion (1b) and the inner ring (5) being press-fitted onto the cylindrical portion (1b) of the hub wheel (1), the inner member (8) being formed with double row inner raceway surfaces (1a, 5a) to be oppositely arranged to the double row outer raceway surfaces (7a, 7a); and double row rolling elements rollably disposed between the double row outer raceway surfaces (7a, 7a) of the outer member (7) and the double row inner raceway surfaces (1a, 5a) of the inner member (8); the inner ring (5) being axially immovably secured by a caulked portion (13, (23)) formed by plastically deforming the end of the cylindrical portion (1b) radially outward; the constant velocity universal joint (3) having an outer joint member (14) including a cup-shaped mouth portion (18), a shoulder portion (19) forming a bottom of the mouth portion (18), and a shaft portion (20) axially extending from the shoulder portion (19) and formed on its inner circumference with female thread (20a) all of which are integrally formed; and end faces of the shoulder portion (19) of the outer joint member (14) and the caulked portion (13,(23)) being formed with face splines (19a; 13a, (23a)) respectively to join the double row rolling bearing (2) and the constant velocity universal joint (3) in a torque transmittable manner **characterized in:**
**that** the face spline (13a, (23a)) of the caulked portion (13, (23)) has a portion in which a tooth height (HO) of the tooth space (22, (24)) of a portion radially outer than the pitch circle diameter (PCD) is set lower than that of other portions.

2. A wheel bearing apparatus of claim 1 wherein the face spline (13a, (23a)) of the caulked portion (13, (23)) is formed by a caulking jig according to the plastic deforming process simultaneously with the formation of the caulked portion (13, (23)).

3. A wheel bearing apparatus of claim 1 or 2 wherein a breast wall (22a) having a predetermined inclination angle (α) is formed on the radially outermost position of the tooth space (22) of the face spline (13a).

4. A wheel bearing apparatus of claim 3 wherein the inclination angle (α) of the breast wall (22a) is set to a range of 10 to 40°.

5. A wheel bearing apparatus of claim 1 or 2 wherein a breast wall (24a) having a circular arc shape of a predetermined radius of curvature (R) is formed on the radially outermost position of the tooth space (24) of the face spline (23a).

6. A wheel bearing apparatus of claim 5 wherein the radius of curvature (R) of the breast wall (24a) is set to a range 2 mm ≦ R ≦ 10 mm.

7. A wheel bearing apparatus of claim 1 wherein the inner member (8) comprises a hub wheel (1) and an inner ring (5), the hub wheel (1) being integrally formed with an inner raceway surface (1a) to be oppositely arranged to one of the double row outer raceway surfaces (7a, 7a) and with a cylindrical portion (1b) axially extending from the inner raceway surface (1a), and the inner ring (5) being formed with an inner raceway surface (5a) to be oppositely arranged to the other of the double row outer raceway surfaces (7a, 7a); and wherein the hub wheel (1) is formed of medium-high carbon steel including carbon of 0.40 to 0.80% by weight and its outer circumferential surface is hardened by high frequency induction hardening as having a surface hardness of 58 to 64 HRC over a region from an inboard-side base (4a) of the wheel mounting flange (4) to the cylindrical portion including the inner raceway surface (1a) while the caulked portion (13, (23)) is maintained in a non-quenched condition having surface hardness after forging.

## Patentansprüche

1. Radlagervorrichtung, bei der ein zweireihiges Wälzlager (2) und ein Gleichlaufgelenk (3) lösbar miteinander verbunden sind, wobei das zweireihige Wälzlager (2) ein äußeres Glied (7) aufweist, das an seinem Außenumfang mit einem Karosserie-Befestigungsflansch (7b) zur Montage an einer Karosserie eines Fahrzeugs und dessen Innenumfang mit zweireihigen äußeren Laufflächen (7a, 7a) ausgebildet ist; ein inneres Glied (8) mit einer Radnabe (1) und mindestens einem Innenring (5), wobei die Radnabe (1) integral mit einem Radmontageflansch (4) an seinem einen Ende und einem sich axial erstreckenden zylindrischen Abschnitt (1b) ausgebildet ist und der Innenring (5) auf den zylindrischen Abschnitt (1b) der Radnabe (1) pressgepasst ist, wobei das innere Glied (8) mit zweireihigen Innenlaufflächen (1a, 5a) ausgebildet ist, die entgegengesetzt zu den doppelreihigen äußeren Laufflächen (7a, 7a) angeordnet sein sollen; und zweireihige Wälzglieder, die zwischen den zweireihigen äußeren Laufflächen (7a, 7a) des äußeren Glieds (7) und den zweireihigen inneren Laufflächen (1a, 5a) des inneren Glieds (8) rollbar angeordnet sind; der Innenring (5) axial unbeweglich durch einen verstemmten Abschnitt (13, (23)) gesichert ist, der durch plastisches Verformen des Endes des zylindrischen Abschnitts (1b) radial nach außen gebildet ist; das Gleichlaufgelenk (3) ein äußeres Gelenkglied (14) hat, das einen becherförmigen Mündungsabschnitt (18), einen einen Boden des Mündungsabschnitts (18) bildenden Schulterabschnitt (19) und einen Wellenabschnitt (20) aufweist, der sich axial vom Schulterabschnitt (19) aus erstreckt und an seinem Innenumfang ein Innengewinde (20a) aufweist, die alle integral ausgebildet sind; und Endflächen des Schulterabschnitts (19) des äußeren Gelenkglieds (14) und des verstemmten Abschnitts (13, (23)), die mit Stirnverzahnung (19a; 13a, (23a)) ausgebildet sind, um das zweireihige Wälzlager (2) und das Gleichlaufgelenk (3) drehmomentübertragbar zu verbinden, **gekennzeichnet dadurch:**
**dass** die Stirnverzahnung (13a, (23a)) des verstemmten Abschnitts (13, (23)) einen Abschnitt aufweist, in dem eine Zahnhöhe (HO) der Zahnlücke (22, (24)) eines radial äußeren als der Teilkreisdurchmesser (PCD) niedriger als die der anderen Abschnitte eingestellt ist.

2. Radlagervorrichtung nach Anspruch 1, wobei die Stirnverzahnung (13a, (23a)) des verstemmten Abschnitts (13, (23)) durch eine Verstemmvorrichtung gemäß dem plastischen Verformungsprozess gleichzeitig mit der Bildung des verstemmten Abschnitts (13, (23)) ausgebildet ist.

3. Radlagervorrichtung nach Anspruch 1 oder 2, bei der eine Brustwand (22a) mit einem vorbestimmten Neigungswinkel (α) an der radial äußersten Position der Zahnlücke (22) der Stirnverzahnung (13a) ausgebildet ist.

4. Radlagervorrichtung nach Anspruch 3, wobei der Neigungswinkel (α) der Brustwand (22a) auf einen Bereich von 10 bis 40° eingestellt ist.

5. Radlagervorrichtung nach Anspruch 1 oder 2, bei der eine Brustwand (24a) mit einer Kreisbogenform mit einem vorbestimmten Krümmungsradius (R) an der radial äußersten Position der Zahnlücke (24) der Stirnverzahnung (23a) ausgebildet ist.

6. Radlagervorrichtung nach Anspruch 5, wobei der Krümmungsradius (R) der Brustwand (24a) auf einen Bereich von 2 mm ≤ R ≤ 10 mm eingestellt ist.

7. Radlagervorrichtung nach Anspruch 1, wobei das innere Glied (8) eine Radnabe (1) und einen Innenring (5) umfasst, wobei die Radnabe (1) ganzheitlich mit einer inneren Laufbahnfläche (1a) ausgebildet ist, die gegenüberliegend zu einer der zweireihigen äußeren Laufflächen (7a, 7a) angeordnet ist und mit einem zylindrischen Abschnitt (1b), der sich axial von der inneren Lauffläche (1a) erstreckt, und dem Innenring (5) mit einer inneren Lauffläche (5a) ausgebildet ist, die entgegengesetzt zu der anderen der doppelreihigen äußeren Laufflächen (7a, 7a) angeordnet sein soll; und wobei die Radnabe (1) aus Stahl mit mittlerem Kohlenstoffgehalt mit 0,40 bis 0,80 Gew.-% Kohlenstoff gebildet ist und seine Außenumfangsfläche durch Hochfrequenzinduktionshärten mit einer Oberflächenhärte von 58 bis 64 HRC über einen Bereich von einer innenseitigen Basis (4a) des Radbefestigungsflansches (4) zu dem zylindrischen Abschnitt einschließlich der inneren Laufbahnoberfläche (1a) gehärtet ist, während der verstemmte Abschnitt (13, (23)) in einem nicht abgeschreckten Zustand mit Oberflächenhärte nach dem Schmieden gehalten wird.

## Revendications

1. Appareil palier de roue dans lequel sont assemblés de manière amovible un roulement à double rangée (2) et un joint homocinétique (3), le roulement à double rangée (2) comprenant un élément externe (7) sur la circonférence externe duquel est formée une bride de fixation de carrosserie (7b) destinée à être fixée sur une carrosserie d'un véhicule et sa circonférence interne pourvue de surfaces de chemin de roulement externes à double rangée (7a, 7a) ; un élément interne (8) comprenant une roue de moyeu (1) et au moins une bague interne (5), la roue de moyeu (1) étant formée d'un seul tenant avec une bride de fixation de roue (4) à l'une de ses extrémités et une portion cylindrique (1b) qui s'étend dans le sens axial et la bague interne (5) étant ajustée avec serrage sur la portion cylindrique (1b) de la roue de moyeu (1), l'élément interne (8) étant formé avec des surfaces de chemin de roulement internes à double rangée (1a, 5a) destinées à être disposées à l'opposé des surfaces de chemin de roulement externes à double rangée (7a, 7a) ; et des éléments de roulement à double rangée disposés en roulement entre les surfaces de chemin de roulement externes à double rangée (7a, 7a) de l'élément externe (7) et les surfaces de chemin de roulement internes à double rangée (1a, 5a) de l'élément interne (8) ; la bague interne (5) étant fixée en position fixe dans le sens axial par une portion matée (13, (23)) formée par déformation plastique de l'extrémité de la portion cylindrique (1b) dans le sens radial vers l'extérieur ; le joint homocinétique (3) comprenant un élément de joint externe (14) comprenant une portion de bouche (18) en forme de coupelle, une portion d'épaulement (19) formant un bas de la portion de bouche (18) et une portion de tige (20) qui s'étend dans le sens axial depuis la portion d'épaulement (19) et sur la surface circonférentielle interne de laquelle est formé un filet femelle (20a), tous ces éléments étant formés d'un seul tenant ; et les faces d'extrémité de la portion d'épaulement (19) de l'élément de joint externe (14) et de la portion matée (13, (23)) étant respectivement formées avec des cannelures de face (19a ; 13a, (23a)) pour se rattacher au roulement à double rangée (2) et au joint homocinétique (3) d'une manière permettant de transmettre un couple, **caractérisé en ce que** la cannelure de face (13a, 23a)) de la portion matée (13, (23)) possède une portion dans laquelle une hauteur de dent (HO) de l'espace entre dents (22, (24)) d'une portion plus à l'extérieur dans le sens radial que le diamètre du cercle primitif (PCD) est réglée plus faible que celle des autres portions.

2. Appareil palier de roue selon la revendication 1, avec lequel la cannelure de face (13a, 23a)) de la portion matée (13, (23)) est formée par un gabarit de matage conformément au processus de déformation plastique simultanément avec la formation de la portion matée (13, (23)).

3. Appareil palier de roue selon la revendication 1 ou 2, avec lequel un piédroit (22a) ayant un angle d'inclinaison (α) prédéterminé est formé sur la position la plus à l'extérieur dans le sens radial de l'espace entre dents (22) de la cannelure de face (13a).

4. Appareil palier de roue selon la revendication 3, avec lequel l'angle d'inclinaison (α) du piédroit (22a) est fixé dans une plage de 10 à 40°.

5. Appareil palier de roue selon la revendication 1 ou 2, avec lequel un piédroit (22a) ayant une forme en arc circulaire d'un rayon de courbure (R) prédéterminé est formé sur la position la plus à l'extérieur dans le sens radial de l'espace entre dents (22) de la cannelure de face (23a).

6. Appareil palier de roue selon la revendication 5, avec lequel le rayon de courbure (R) du piédroit (24a) est fixé dans une plage de 2 mm ≤ R ≤ 10 mm.

7. Appareil palier de roue selon la revendication 1, avec lequel l'élément interne (8) comprend une roue de moyeu (1) et une bague interne (5), la roue de moyeu (1) étant formée d'un seul tenant avec une surface de chemin de roulement interne (1a) de manière à être disposée à l'opposé de l'une des surfaces de chemin de roulement externes à double rangée (7a, 7a) et comprenant une portion cylindrique (1b) qui s'étend dans le sens axial depuis la surface de chemin de roulement interne (1a), et la bague interne (5) étant formée avec une surface de chemin de roulement interne (5a) de manière à être disposée à l'opposé de l'autre des surfaces de chemin de roulement externes à double rangée (7a, 7a) ; et avec lequel la roue de moyeu (1) est constituée d'un acier au carbone moyen à élevé contenant de 0,40 à 0,80 % massique de carbone et sa surface circonférentielle externe est trempée par trempe par induction à haute fréquence de sorte qu'elle présente une dureté de surface de 58 à 64 HRC sur une région depuis une base côté intérieur (4a) de la bride de fixation de roue (4) jusqu'à la portion cylindrique comprenant la surface de chemin de roulement interne à double rangée (1a), alors que la portion matée (13, (23)) est maintenue dans un état non trempé ayant une dureté de surface après forgeage.
